# EUROPEAN PATENT APPLICATION

(11) **EP 4 607 874 A1**
(43) Date of publication of application: **27.08.2025**
(21) Application number: 25158560.0
(22) Date of filing: 18.02.2025
(51) Int. Cl.: H04L 41/0631, H04L 43/0811, H04L 43/50

(54) **ETHERNET LINE FAULT DETECTION**

(30) Priority: 21.02.2024 US 202418583566
(71) Applicant: Cambium Networks Ltd, Ashburton, Devon TQ13 7UP (GB)
(72) Inventor: BLOSCO, John Martin, Rolling Meadows, 60008 (US); NAHRA, James J., Rolling Meadows, 60008 (US); KARUNAKARAN, Kumara Das, Rolling Meadows, 60008 (US)
(74) Representative: EIP

(57) **Abstract**

A method of identifying faults in wired connections between network devices and an external network is provided. The method involves detecting a fault in a wired connection between a first network device and a second network device, establishing a wireless connection between the first and second network devices, testing the first network device using the second network device, and generating fault determination data representing the cause of the fault. A network device for implementing at least part of the method is also provided. The network device is configured to detect a fault, connect to a further network device, enable the further network device to test the network device, and to generate fault detection data.

## Description

### BACKGROUND OF THE INVENTION

### FIELD OF THE INVENTION

The present disclosure relates to ethernet fault line detection. More specifically, but not exclusively, the present disclosure relates to the use of wireless backdoor procedures for identifying faults in wired network connections in network devices.

### DESCRIPTION OF RELATED TECHNOLOGY

Network devices, such as routers and access points, can be connected in networks using wired connections. A prevalent method for connecting network devices includes the use of Ethernet cables. Ethernet cables can typically be connected to a corresponding Ethernet socket in a network device. At the other end of the Ethernet cable can be connected to other network devices, such as routers or network switches. Ethernet cables carry data traffic between network devices and an external network, such as the internet. Other devices, such as mobile phones and personal computers, can connect to the network devices wireless to access the external network.

### SUMMARY

According to a first aspect of the present disclosure there is provided A network device configured to facilitate communication between one or more user devices and an external network, the network device comprising at least one processor, storage, and two or more communication modules, wherein the two or more communication modules include: a wired communication module adapted to receive an ethernet cable for connecting the network device to the external network; and a wireless communication module, wherein the storage comprises computer-executable instructions which, when executed by the at last one processor, cause the network device to perform a fault detection procedure, the fault detection procedure comprising: detecting a fault in a connection with the external network over the wired communication module; connecting to a further network device using the wireless communication module; enabling the further network device to test the network device to identify a cause of the fault in the connection with the external network over the wired communication module; and generating fault determination data representing the cause of the fault.

Diagnosing faults in wired connections with external networks, such as the internet, is a specialist task that can lead to significant down time, and resource expenditure to correct. It is not uncommon for faults in wired connections to arise due to errors in installation, poor wiring or connections in buildings or related infrastructure, user error during set up, and software issues that can be corrected over the air. When an internet connection goes down, it is common for users and/or engineers to suspect defects in the network devices, such as routers, as the cause. The network device is often the most visible aspect of the network infrastructure. However, unnecessary calls to repair services and/or returning network devices for repair is costly, resource hungry, and wasteful of components and hardware. Unnecessary returning of network devices can also lead to increased down time in the network. By connecting to further network devices on detection of a fault and performing tests on various aspects of the network device, it becomes possible to quickly, and efficiently, narrow down the cause of the fault on site. This enables users and engineers to quickly address the real causes of faults, and mitigates the returning of functional devices.

The network device may, in some cases, also be configured to connect to other network devices which have developed faults in their wired connections. For example, where a plurality of network devices are installed on a single premises, each of them may be configured with (i) instructions to connect to other network devices and enable them to diagnose faults in their own wired connection, and/or (ii) instructions to connect to other network devices and to test and/or diagnose faults in those other network devices when their wired connections fail.

In this way, it becomes possible to deploy a system of cooperative network devices which are able to support, test, and/or correct faults in each other. This provides a stable and resilient network infrastructure, mitigating down time and resource expenditure in servicing the network devices.

According to a second aspect of the present disclosure there is provided a method of identifying faults in wired connections between network devices and an external network, the network devices being configured to facilitate communication between one or more user devices and the external network, wherein the method comprises: detecting a fault in a wired connection between a first network device and the external network; establishing a wireless connection between the first network device and a second network device; testing the first network device, using the second network device, to identify a cause of the fault in the wired connection; and generating fault determination data representing the cause of the fault.

By implementing a method such as this, it is possible for network devices to support and test other network devices in a premises, reducing potential down time when connections to external networks fail.

Further features will be apparent from the following description of preferred examples which is provided with reference to the accompanying Figures.

### BRIEF DESCRIPTION OF THE DRAWINGS

Figure 1 is a schematic diagram showing a network configuration;
Figure 2 is a flow chart showing a method of identifying faults in wired connections between network devices and an external network according to examples;
Figure 3 is a schematic diagram showing a network configuration according to examples;
Figure 4 is a schematic diagram of a network device according to examples;
Figure 5 is a flow chart showing a fault detection procedure according to examples;
Figure 6A is a schematic diagram showing a process for monitoring an operational status of a wired communication module according to examples;
Figure 6B is a signal diagram illustrating a measured state during a time period T0 to TN, according to an example in which the state is a disconnected state;
Figure 6C is a signal diagram illustrating a measured state during a time period T0 to TN, according to an example in which the state is a marginal state;
Figure 6D is a signal diagram illustrating a measured state during a time period T0 to TN, according to an example in which the state changes between a connected state and a disconnected state;
Figure 6E is a signal diagram illustrating a measured state during a time period T0 to TN, according to an example in which the state changes between a connected state and a disconnected state;
Figure 7 is a schematic diagram showing network device system data according to examples; and
Figure 8 is a flow chart showing a fault determination procedure according to examples.

### DETAILED DESCRIPTION OF CERTAIN INVENTIVE EMBODIMENTS

Local computer networks, such as local area networks (LANs) and wireless local area networks (WLANs) are used in a variety of environments to connect computing devices. LANs are typically considered to be efficient at connecting devices in close proximity to each other and are able to provide highly stable connections with considerable bandwidth capabilities. WLANs are often used for their convenience and flexibility in providing network connectivity without the need for physical cables.

LANs and WLANs may be used in homes, offices and corporate building, educational institutions, healthcare facilities, retail spaces, transport hubs, hotels and hospitality venues, public spaces and municipalities, industrial and warehouse setting, conferences, and many others. In these environments LANs and WLANs enable computing devices such as personal computers, laptop computers, mobile smartphones, tablet computers, smart connected appliances, general IoT devices, and many other device types, to communicate.

Devices in a LAN or WLAN may be provided with access to wide area networks (WANs) such as the internet, by network devices. Network devices, such as routers or network switches, may include facilities for a wired connection, such as an Ethernet port, to connect the network device into a wide area network, such as the internet, via an access network.

Network devices may connect to other computing devices, such as personal computers and mobile phones, using wireless communication protocols. For example, a network device may be configured to implement certain standards such any of the set of IEEE 802.11 Standards for wireless fidelity (Wi-Fi) communication. Other examples of relevant communications protocols and/or standards that may be provided in a network device include Wi-Fi protected access (e.g. WPA, WPA2, WPA3), Wi-Fi multimedia (WMM) which is a subset of the 802.11e standard, dynamic host configuration protocol (DHCP), hypertext transfer protocol (HTTP) and HTTP secure (HTTPS), transmission control protocol (TCP), and any other relevant standards or protocols that may be used when communicating with, and facilitating communication between, computing devices.

In some cases, a network device may fail to provide a connection to the external network over the wired connection due to a fault. Faults can occur due to any of a number of potential causes. Defects in network devices can lead to a failure to connect to an external network. For example, wiring, circuits, power supplies, connectors, software, or firmware installed in the network device may be defective and lead to the network device being unable to connect to the external network. These defects may be present when the network device is sold and shipped to users, as manufacturing defects, or can develop later on during use.

Alternative causes of faults in connections to the external network may include installation errors. Installation errors may include any of (i) incorrect installation of an Ethernet cable into a socket of a network device, (ii) defective or incorrect cabling in a building or other facility in which the network device is installed, (iii) lack of power supply, (iv) incorrect set up of the network device when booted up, and others.

In some circumstances, faults may be corrected without removing the network device from the site in which it is installed. For example, where the fault is caused by an installation error, the fault may be fixed by reinstalling, or correcting the installation of, the network device. This may involve (i) reconnecting an Ethernet cable into the socket of the network device, (ii) fixing defective or poorly routed wiring in the building or installation, (iii) correcting a power supply issue, or (iv) resetting the network device and setting it up correctly.

In some cases, certain faults arising from defects in the network device may also be corrected on site. For example, where the fault is due to defective software in the network device, updates or re-installation of software may be used to correct the fault. Failure to connect to the external network may also be caused by network failures upstream. For example, a failure in an access network may cause the connection between the network device and the external network to drop. Correcting these upstream failures is typically done without removing the network device from the site in which it is installed.

Other causes of faults, such as defective hardware in the network device, may not be possible to fix on site. Where the fault arises due to defective hardware in the network device, fixing the fault may require the network device to be removed from the installation site and serviced, or replaced. Removing the network device from the installation site for servicing, or replacement, typically causes delays and increased cost. This can result in significant down time in the network, and a drain on resources and components in manufacturing and servicing.

It is generally difficult for end users of, or engineers installing, network devices to troubleshoot the causes of a fault in the connection between network device and the external network. The capabilities of end users and engineers of network device can vary significantly. While some users may be capable of performing at least basic troubleshooting procedures to identify the cause of a fault, others may be generally incapable or unwilling to troubleshoot a network device when the connection between the network device and an external network fails.

Where the end user, or engineer, is not able to identify the cause of a fault it is common for them to send the network device back to the manufacturer or distributor to obtain a refund or replacement. If the fault is not caused by a defect in the network device, or if the defect in the network device is due to software or firmware issues that can be corrected on site, returning the device to the manufacturer can cause a significant and unnecessary drain on resources and time. Replacing fully functional network devices may also waste valuable electronic componentry and other hardware. In cases where the end user, or engineer, does not return the network device, they may still require significant time and technical assistance in identifying and correcting the cause of the fault.

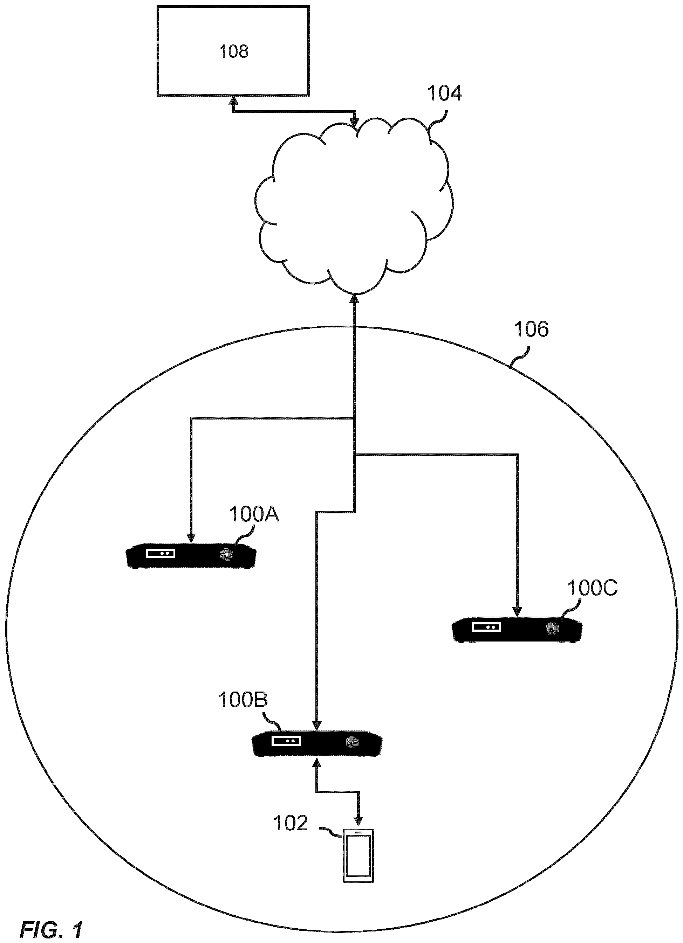

Figure 1 shows a general network architecture in which a plurality of network devices 100A to 100C, providing connectivity to a user device 102 at an institution 106, implement a local network, such as a WAN or LAN. The institution 106 may be a single building, or multiple buildings, owned or operated in unison. For example, the institution 106 may be company offices, a school, university, library and so forth. The network devices 100A to 100C are connected to an external network 104, such as the internet, over wired connections that enable the network devices 100A to 100C to facilitate communication between the user device 102 and the external network 104. A remote network management device 108 may also be provided in, or connected to, the external network 104. This remote network management device 108 may be used to manage the network devices 100A to 100C remotely. The remote network management device 108 may be used to monitor the connection between the network devices 100A to 100C and the external network 104.

If the wired connection between one of the network devices 100A and the external network 104 fails, it may not be possible to determine the cause of the fault without manual inspection or physical testing of the network device. While the remote network management device 108 may be used to monitor and/or control the network device 100A, this may only be possible when the network device 100A has a connection with the remote network management device 108 over the external network 104.

Certain examples described herein provide methods and systems for detecting and identifying a cause of a fault in a connection between a network device and an external network. A network device, such as a router, having a wired connection module for connecting to the external network, and a wireless communication module is provided. When a fault in the connection to the external network is detected, the network device is able to connect to one or more further network devices, using the wireless communication module, to perform tests to identify the cause of the fault. Data representing the cause of the fault may then be generated and, where possible, used to correct the cause of the fault.

In larger facilities, such as in commercial or governmental facilities, including hospitals, offices, schools, universities, factories, multiple unit dwellings, a plurality of network devices may be installed at the same site. For example, in a multiple unit dwelling each unit may have a respective network device. In other examples, such as in hospitals, offices, and schools, a plurality of network devices may be installed at various locations in the facility to provide broad and/or uniform connectivity to user devices. When the connection for one of these network devices fails, it is possible to use one or more further network devices to help identify and/or correct the cause of the failure. In this way, it is possible to reduce the amount of resource spent manually troubleshooting the network device and/or unnecessarily returning the network device to the manufacturer or distributor for repair.

By leveraging cooperative troubleshooting between a plurality of network devices it becomes possible to increase the speed of installation of network devices, reduce down time in a network, and in some cases identify access network failures faster. For example, where the connection between a network device and an external network fails, due to a failure in an access network, time may be spent troubleshooting that specific network device to identify the cause. If a plurality of network devices have a similar connection failure at the same time, or in a given period of time, the cooperative troubleshooting provided by other network devices may be able to identify correlations between these connection failures more quickly. This makes it possible to determine that the cause of these failures is outside of the network devices, such as in an access network, more rapidly.

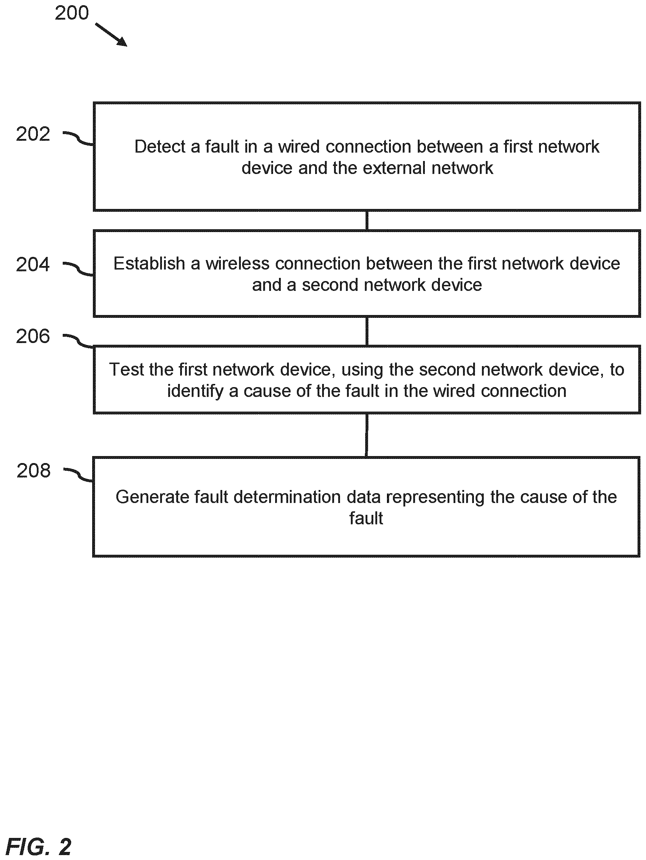

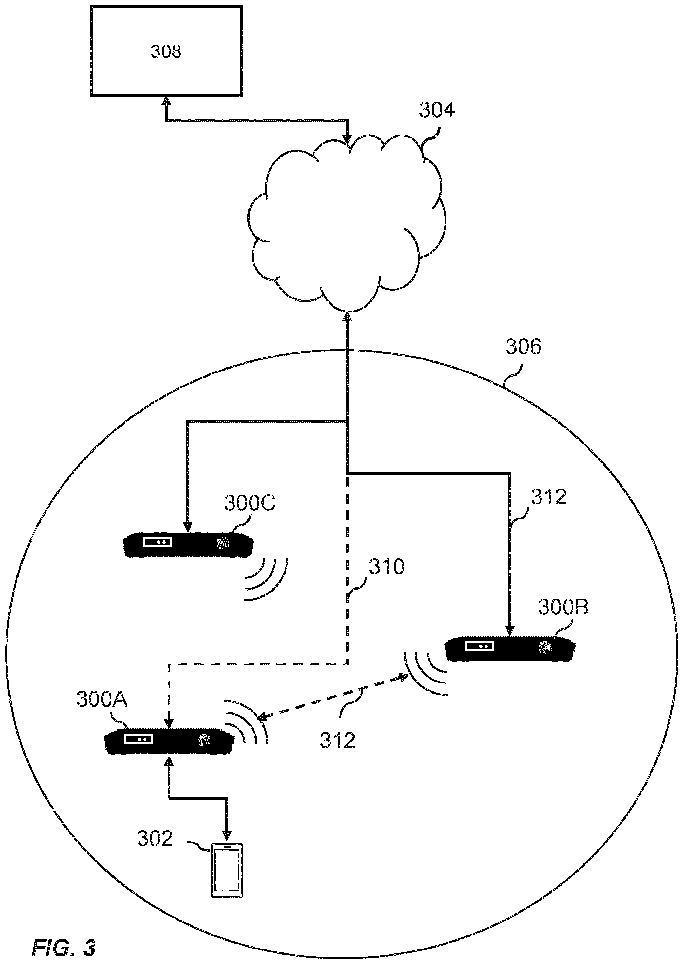

Figure 2 shows a method 200 of identifying faults in wired connections between network devices and an external network. Figure 3 shows a network architecture according to examples of the method 200. The network architecture shown in Figure 3 is similar to that shown and described with respect to Figure 1. A plurality of network devices 300A to 300C that are configured to facilitate communication between one or more user devices 302 and an external network 304, such as the internet, are provided in an institution 306. A remote network management device 308 for monitoring and/or managing the network devices 300A to 300C may be connected to the network devices 300A to 300C over the external network 304.

The network devices 300A to 300C shown in Figure 3 differ to the network devices 100A to 100C shown in Figure 1 as they are specifically configured to implement certain functions and/or steps of the method 200. These differences will become apparent from the following description of the method 200 which is provided with reference to Figure 2 and Figure 3. It is to be appreciated that the method 200 may be implemented according to various examples, and that while certain functions are described herein as being performed by one or more particular entities shown in Figure 3, in other examples different entities may perform these functions.

The method 200 involves detecting 202 a fault in a wired connection 310 between a first network device 300A and the external network 304. A wireless connection 312 is established 204 between the first network device 300A and a second network device 300B. The first network device 300A is tested 206, using the second network device 300B, to identify a cause of the fault in the wired connection 310. Fault determination data, representing the cause of the fault, is then generated 208. In this way, it is possible to determine the cause of the fault in the wired connection 310 without physical inspection or testing of the network device 300A. By identifying the cause of the fault on site, it is possible to reduce the number of network devices 300A to 300C which are unnecessarily returned for repair and/or reduce the time taken to identify and correct wired connection faults.

In some cases, the testing 206 may not be capable of determining a specific cause of the fault, but may be able to determine a fault cause category. For example, where the fault is caused by a hardware failure inside the first network device 300A, the second network device 300B may be able to determine that the fault is caused by such a hardware failure, rather than by an installation error or Ethernet cable fault.

While the second network device 300B may not be able to determine, in the testing 206, which specific hardware failure in the network device 300A has occurred, identifying whether the fault is caused by a network device failure, or an installation error, may shortcut the troubleshooting process. Determining a fault cause category enables an end user, or engineer, to focus troubleshooting on a smaller number of potential causes, thereby reducing the resource and time spent on correcting faults in the wired connection 310. If the fault cause category indicates a hardware issue in the network device 300A, the user may return the device for repair. Additionally, the manufacturers, or distributors, may restrict device returns to those network devices 300A for which the fault determination data has identified the cause of the fault as being due to hardware defects in the network device 300A. In this way, it is possible to reduce electronic waste and/or unnecessary replacement of functional, or repairable, components.

In some examples, the first network device 300A and the second network device 300B, comprise routers configured to enable the user devices 302 to communicate with the external network 304. Routers typically play a role in directing traffic between different networks. Functions of routers may include (i) connecting networks, (ii) data routing, and (iii) multiple device management. (i) Connecting networks may involve operating as a traffic director, managing connections between two or more network, including port management, security protocols, and other applicable functions. (ii) Data routing may involve identifying recipients of data packets and their respective network addresses, and routing the data packets based on these network addresses. (iii) Multiple device management may involve enabling multiple user devices to access external networks via a single device.

The method 200 may further comprise the second network device 300B sending the fault determination data to a user device 302 associated with the first network device 300A. For example, where the user device 302 is connected to the external network 304 via the first network device 300A, the second network device 300B may provide the fault determination data to the user device 302. In this way, when the connection to the external network 304 fails, the user device 302 is provided with an indication of why the connection failed. This enables a user of the user device 302 to take immediate action to correct the cause of the fault and/or to contact an engineer or support service with relevant information for fixing the cause of the fault.

Additionally, or alternatively, the second network device 300B may send the fault determination data to a remote network management device 308 over a respective wireless connection 312 between the second network device 300B and the external network 304. By providing the fault determination data to the remote network management device 308, it become possible for the remote network management device 308 to mitigate an impact of the failed connection 310. For example, the remote network management device 308 may reconfigure one or more other network devices 300A to 300C to support user devices 302 impacted by the failure of the connection 310. The remote network management device 308 may also take one or more actions to correct the fault. For example, where the fault determination data indicates that the fault is caused by a failure in an access network (not shown) via which the network device 300A accesses the external network 304, the remote network management device 308 may generate an indication that the access network is to be fixed. This indication may be sent to an operator of the access network, instructing the operator to fix the access network, or may be sent to a network administrator, or service provider.

Detecting 202 the fault in the wired connection 310 may be performed at the first network device 300A. For example, the first network device 300A may be configured to monitor the state of the wired connection 310 and to identify when a fault occurs. This may involve monitoring data packets sent over the wired connection 310 and identifying when one or more of these data packets fails to be sent, or an expected data packet is not received. Detecting the fault in the wired connection 310 at the first network device 300A may provide fast and efficient fault detection, without the added latency which may introduced when detecting the fault at an external computing device.

However, in other examples detecting 202 the fault may be performed at the remote network management device 308. Detecting 202 the fault using the remote network management 308 device may be desirable where the functionality of the network device 300A is less sophisticated, or where there is a desire to reduce the computational load on the network device 300A.

Establishing a connection between the first network device 300A and the second network device 300B may be initiated by either of the first network device 300A or the second network device 300B. In a first example, the first network device 300A may be configured in a station mode for requesting to connecting to the second network device 300B. The first network device 300A may then request to connect to the second network device 300B, the request being generated at least in part using first security credentials stored in the first network device 300A. The second network device 300B may then authenticate the first network device 300A based on the request and second security credentials stored in the second network device 300B. In this way, the first network device 300A may act as a user device to establish a connection with the second network device 300B. In this example, the second network device 300B may not need to be aware of the fault in the wired connection 310. Hence, the method 200 may be initiated by the first network device 300A automatically. This is particularly of use in examples where the first network device 300A detects the fault in the wired connection 310 independently.

In a second, alternative, example establishing the connection between the first 300A and second 300B network devices may be initiated by the second network device 300B. In this example, the second network device 300B may be configured in a station mode for connecting to the first network device 300A. The second network device 300B requests to connect to the first network device 300A, the request being generated at least in part using the second security credential. The first network device 300A may then authenticate the second network device 300B using the request and the first security credentials. Where the first network device 300A is unable to connect to the external network 304, but maintains a functioning wireless connection facility for user devices, this may enable the second network device 300B to act like a user device for the purpose of connecting to the first network device 300A before performing testing. This example is particularly of use where the detection 202 of the fault is performed at a remote network management device 308, which may then instruct the second network device 300B to connect to and test the first network device 300A. Similarly, where the first network device 300A is incapable of, or otherwise fails to, detect 202 the fault the second network device 300B may initiate the testing procedure to identify the cause of the fault.

After connecting to the second network device 300B, the second network device 300B may obtain access to the first network device 300A for the purpose of performing the testing, using a suitable access protocol. For example, the second network device 300B may use the Secure Shell protocol to connect into the first network device 300A. By using protocols, such as the Secure Shell (SSH) protocol, the second network device 300B may be capable of using command-line execution to run tests on the first network device 300A. While SSH is provided as an example, any suitable protocol may be used, for example, Remote Desktop Protocol (RDP), Network File System (NFS), and so forth.

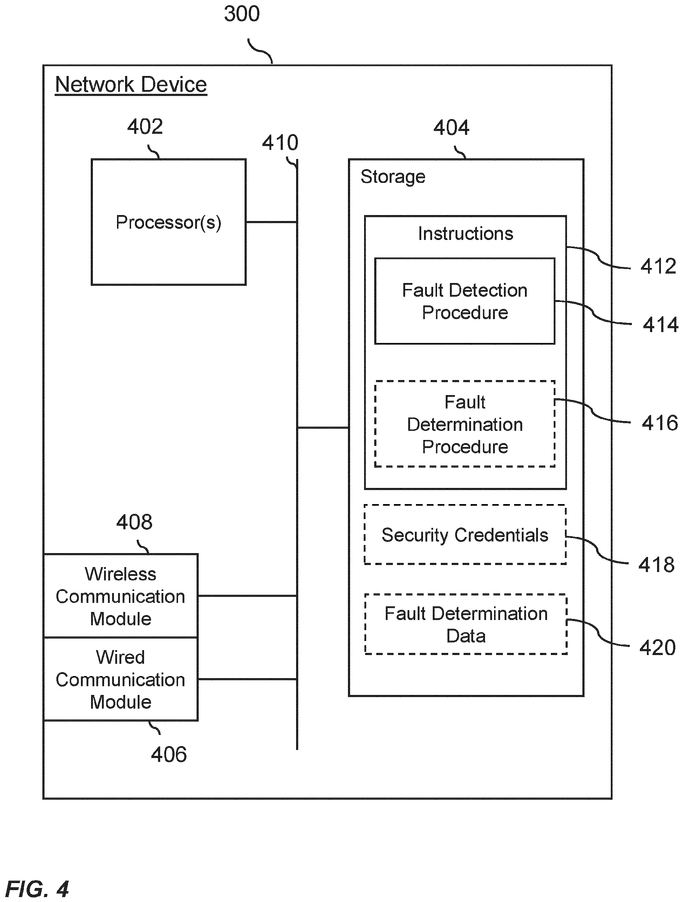

Figure 4 shows an example of a network device 300 configured to facilitate the communication between one or more user devices 302 and the external network 304. The network device 300 of Figure 4 is configured to perform certain functions in accordance with examples of the method 200 described above. For example, the network device 300 shown in Figure 4 may be the same network device 300A shown in Figure 3. In the following description provided with respect to Figure 4 to 7, the network device 300 may also be referred to as the network device 300A shown in Figure 3 for reference.

The network device 300 comprises at least one processor 402, storage 404, and two or more communication modules 406 and 408. The at least one processor 402, storage 404, and communication modules 406 and 408 are connected over a communications channel 410, such as a bus. The two or more communication modules 406 and 408 include a wired communication module 406, adapted to receive an Ethernet cable for connecting the network device 300 to the external network 304, and a wireless communication module 408. The wireless communication module 408 may implement known protocols and standards such as Wi-Fi, Bluetooth, or other suitable wireless connectivity protocols. The network device 300 may include further communications modules (not shown), including further wired or wireless communication modules.

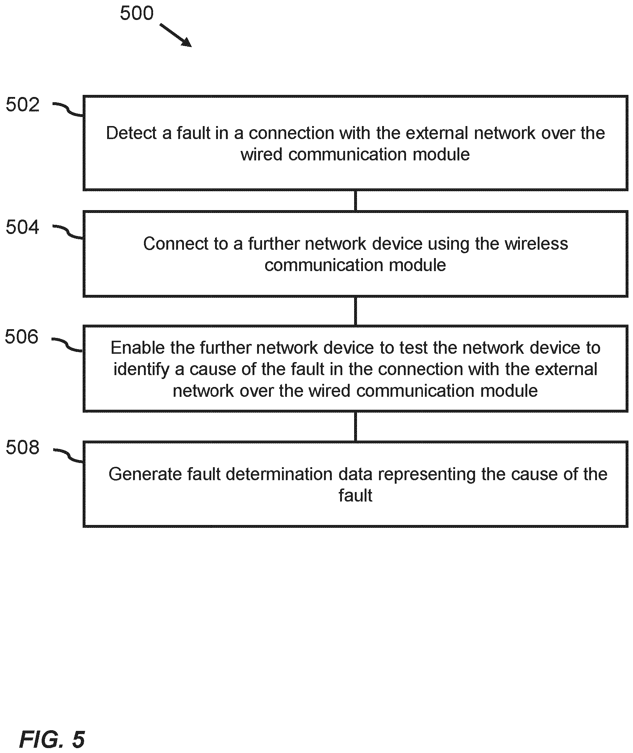

The storage 404 is suitable for storing a set of computer-executable instructions 412 for executing one or more functions of the method 200 described above. In the example shown, the computer executable instructions 412 include instructions 414 which, when executed by the processor(s) 402, cause the network device 300 to perform a fault detection procedure. The fault detection procedure will be described further below with respect to Figures 5 to 7. In some examples, the computer-executable instructions may include instructions 416 which, when executed by the processor(s) 402, cause the network device 300 to perform a fault determination procedure. The fault determination procedure will be described further below with respect to Figures 5 to 6E.

The storage 404 may also be suitable for storing other types of data such as security credentials 418 and/or fault determination data 420. The security credentials 418 may be stored in the storage 404 prior to shipping or providing the network device 300 to a user. The storage 404 may include any combination of volatile and non-volatile storage, for example, a combination of read-only memory (ROM) and one or more types of random-access memory (RAM), such as dynamic RAM, synchronous RAM, and so forth. ROM may be included in the form of both disc-based (e.g. hard drive) or flash memory (e.g. solid-state drive(s)).

The processor(s) 402 may include any suitable combination of processing circuitry configured to execute the instructions 412. The processor(s) 402 may include one or more general purpose processors, such as central processing units (CPU), and/or application specific processing circuitry or processing units.

Turning now to Figure 5 an example of the fault detection procedure 500 is shown. In the examples of the fault detection procedure 500 described with respect to Figure 5, the network device 300 is the first network device 300A shown in Figure 3. Reference numerals used to refer to the further network device are provided with respect to the second network device 300B shown in Figure 3. However, it is to be appreciated that the second network device 300B may also comprise the same components and instructions as the first network device 300A.

The fault detection procedure 500 includes detecting 502 a fault in a connection 310 with the external network 304 over the wired communication module 406 and connecting 504 to a further network device 300B using the wireless communication module 408. Connecting to the further network device 300B may be performed in response to the detecting 502 the fault in the connection 310. In some examples, the further network device 300B may be another network device configured to facilitate user devices 302 connecting to the external network 304. Where the network device 300 is the first network device 300A shown in Figure 3, the further network device 300B may be the second network device 300B to which the first network device 300A connects.

The fault detection procedure 500 comprises enabling 506 the further network device 300B to test the network device 300A to identify a cause of the fault in the connection 310 with the external network 304 over the wired communication module. Fault determination data 420, representing the cause of the fault, is then generated 508. In some examples, the fault determination data 420 may include information representative of, but not directly indicating, the cause of the fault. For example, the fault determination data 420 may include usage statistics, system data, or other data which may represent the cause of the fault. The fault determination data 420 may additionally, or alternatively, include an indication of the fault or fault cause category. For example, the fault determination data 420 may indicate whether the fault is caused by a malfunction of hardware of the network device 300, installation errors, software or firmware issues, or whether the fault is caused by failures or malfunctions occurring outside of the network device 300A or in the institution, or building, in which the network device 300A is installed. To this end, the fault determination data 420 may indicate that no hardware malfunctions, software errors, or Ethernet cable installation errors are detected. This may imply that the cause of the fault is likely to be due to failures in the wiring in the building, or due to upstream network failures.

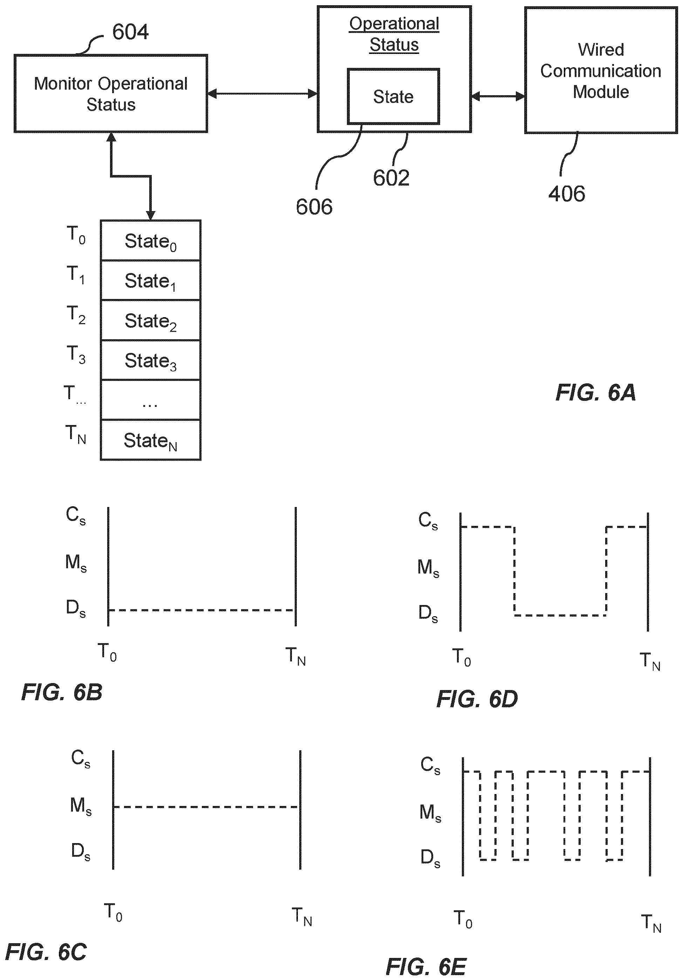

Detecting 502 a fault in the connection 310 may comprise monitoring an operational status of the wired communication module 406. Turning to Figure 6A an example is shown in which an operational status 602 of the wired communication module 406 is monitored 604. The network device 300A may include one or more functions connected to the wired communication module 406 that are configured to test or read the operational status 602 of the wired communication module 406. These functions mat be configured to the size, frequency, or format of data transmitted over the wired communication module 406 to determine the operational status 602. Other relevant criteria, such as power flow to and/or from the wired communication module 406 may also be monitored to determine the operational status 602.

The operational status 602 of the wired communication module 406 may comprise a state 606 which takes the value of one of a plurality of possible states. The plurality of possible states includes at least a disconnected state and a connected state.

The operational status 602 of the wired communication module 406 may change over time such that the state 606 of the wired communication module 406 at a first time T0 may be different to the state 606 of the wired communication module 406 at a second time T1 that is different to the first time.

The disconnected state indicates that the connection between the network device 300A and the external network 304 over the wired communication module 406 is not functioning. The connected state indicates that the connection between the network device 300A and the external network 304 over the wired communication module 406 is functioning.

In some examples, the operational status 602 of the wired communication module 406 is monitored for a predetermined period of time. In this case, a fault may be detected when the operational status 602 of the wired communication module 406 comprises the disconnected state for the duration of the predetermined period of time. Figure 6A shows an example in which the operational status 602 of the wired communication module 406 is monitored for period of time T0 to TN. In the example shown, the operational status 602 of the wired communication module 406 is determined periodically at times T0, T1, T2, T3, to TN. Where the operational status 602 comprises the disconnected state at each of these times, a fault may be detected. In this example, the operational status 602 is determined at specific times during the time period. In other examples (not shown) the operational status 602 may be continuously monitored during the time period.

The plurality of operational states may additionally comprise a marginal state, wherein a marginal state may be representative of a weak or unstable connection 310 with the external network 304 over the wired communication module 406. In some examples, a fault may be detected when any of a plurality of conditions is satisfied. The plurality of conditions may include any of: (a) the operational status 602 of the wired communication module 406 comprising the disconnected state Ds for the duration of the predetermined period of time T0 to TN, (b) the operational status 602 of the wired communication module 406 comprising the marginal state Ms for the duration of the predetermined period of time T0 to TN, or (c) the operational status 602 of the wired communication module 406 comprising the connected state Cs for a portion of the predetermined period of time T0 to TN, wherein the portion of the predetermined period of time T0 to TN is less than a threshold period of time.

Figures 6B to 6E show a plurality of examples in each of which at least one of the plurality of conditions is satisfied. According to the example of Figure 6B, the operational status 602 of the wired communication module 406 comprises the disconnected state Ds for the duration of the predetermined period of time T0 to TN. According to the example of Figure 6C, the operational status 602 of the wired communication module 406 comprises the marginal state Ms for the duration of the predetermined period of time T0 to TN.

According to the example of Figures 6D and 6E, the operational status 602 of the wired communication module 406 comprises the connected state Cs for a portion of the predetermined period of time T0 to TN that is less than a threshold period of time. In the example shown in Figure 6D, it can be seen that the operational status 602 changed to the disconnected stat Ds for a portion of the predetermined period of time T0 to TN, before changing back to the connected state Cs. By monitoring the total portion of the period of time T0 to TN for which the operational status comprised the connected state Cs it is possible to detect failures even in cases where the wired connection is occasionally able to provide a connection to the external network 304. This may be the case where an Ethernet cable connected to the network device 300, or connected elsewhere in a building in which the device 300A is installed, is loose and subject to occasional failure due to movement or vibration.

While an instantaneous determination of the operational status 602 may indicate that the wired connection 310 is functioning, for example where it is determined to be in the connected state Cs, a measurement over a longer duration in which changes in the state can be detected may enable more accurate fault detection. Similarly Figure 6E shows an example in which the state switching is more frequent. In the examples shown, in Figures 6D and 6E, the operational status 602 changes between the connected state Cs and the disconnected state Ds, however, it is to be appreciated that in other examples the operational status 602 may change between the connected state Cs and the marginal state Ms, the disconnected state Ds and the marginal state Ms, or between all three states.

In some examples, the computer-executable instructions 412 comprise an instruction that, when executed by the processor(s) 402, cause the network device 300A to trigger execution of the fault detection procedure 500 in response to a booting procedure in the network device 300. A booting procedure may, for example, be procedure or program run by the network device 300A when it is powered on. This may include when the network device 300A is powered on for the first time after being installed and/or may include when the network device 300A is restarted. In some cases, the booting procedure may include an instruction to load and/or run the fault detection procedure 500. In this way, when a user or engineer installs the device 300A and powers it on, the network device 300A is able to automatically detect whether it is able to connect to the external network 304 using the wired communication module 406.

The fault detection procedure 500 may alternatively, or additionally, running on the network device 300A during normal use, or continuously. For example, the fault detection procedure 500, when running on the network device 300, may regularly, or periodically, monitor or test the operational status of the wired communication module 406. When a fault is detected 502, the fault detection procedure 500 may then move into the next step of the procedure by connecting 504 to the further network device 300B.

Connecting to the further network device 300B may comprise configuring the network device 300A to operate in a station mode for requesting to connect to further network devices. In the station mode the network device 300A may operate as a client which can request to connect to access points to get internet connection and other network services. The network device 300A may then identify the further network device 300B using the wireless communication module 408. Identifying the further network device 300B may include performing a scan using a Wi-Fi communication module to detect further network devices in range.

In some examples, only one further network device 300B may be in range and identifying the further network device 300B comprises detecting the further network device 300B using the scan. In other examples, there may be a plurality of proximal further network devices detected in a Wi-Fi scan. In this case, identifying the further network device 300B to which the network device 300A will connect, may comprise selecting the further network device 300B from the plurality of proximal further network devices based on an identifier, manufacturer, signal strength, or other relevant characteristic.

Once the further network device 300B is identified, the network device 300A may connect to the further network device 300B using the security credentials 418 in the storage. These security credentials 418 may include a public shared key. In some examples, the security credentials 418 include a specific public shared key that is associated with the network device 300A and the further network device 300B, and not shared with user devices 302.

The network device 300A may then send a request for the further network device 300B to test the network device 300A to identify a cause of the fault in the connection 310 with the external network 304 over the wired communication module 406.

Alternatively, or additionally, the network device 300A may be configured to operate in an access point (AP) mode for connecting to further network devices. In an AP mode, the network device 300A may implement its own network with a respective service set identifier (SSID). Wireless computing devices such as user device 302, or further network devices operating in a station mode, may then be able to connect to the network device 300. In the AP mode, the network device 300A may implement a password protection feature, wherein devices attempting to connect to the network device 300A use the password to connect to the network device 300.

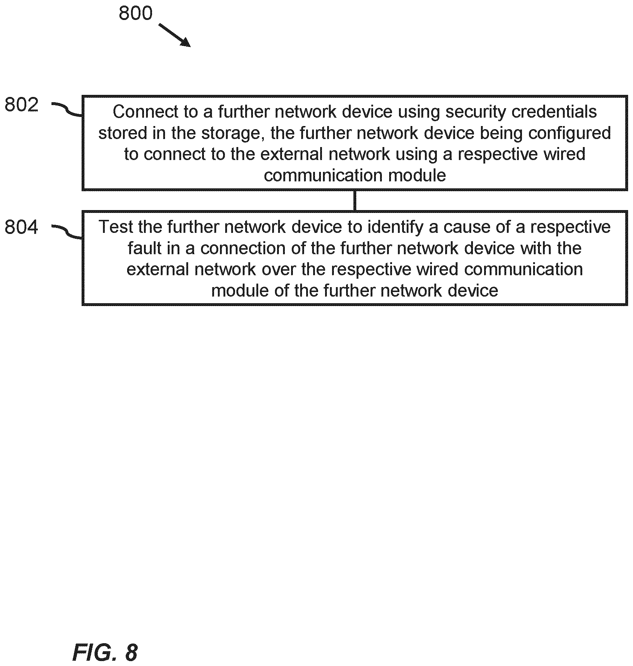

In the AP mode, the network device 300A may be identifiable by the further network devices when the further network device 300B perform wireless scans. In the AP mode, the network device 300A may receive a request from the further network device 300B to connect to the network device 300. The request may include, or be generated based on, a shared password such as a PSK. The network device 300A may then authenticate the request from the further network device 300B and enable the further network device 300B to connect to the network device 300A for the purpose of performing tests. The further network device 300B may use a protocol such as SSH to access services in the network device 300A to perform the tests. The further network device 300B may be implementing a fault determination procedure, which will be described further below with respect to Figure 8.

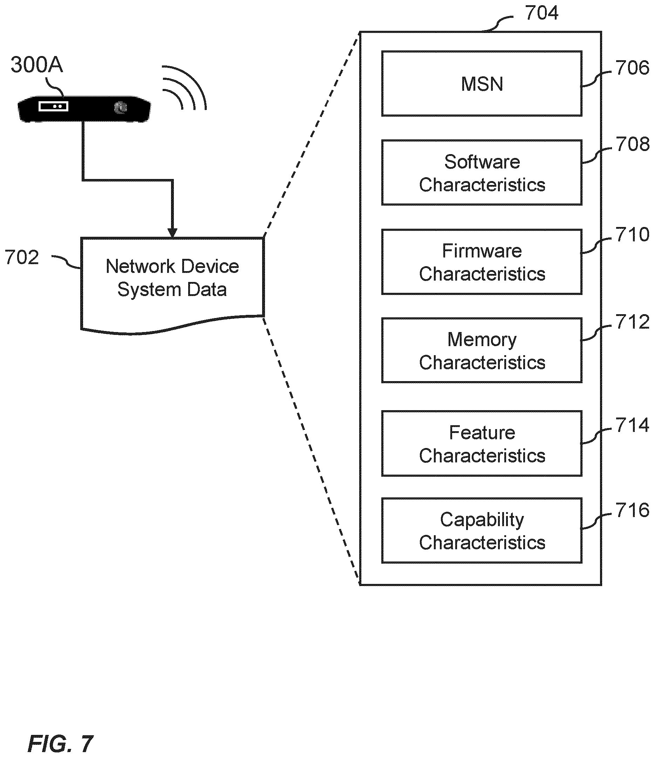

Enabling 506 the further network device 300B to identify a cause of the fault in the connection 310 with the external network 304 over the wired communication module 406 may comprise providing network device system data to the further network device 300B. Turning to Figure 7 an example of network system data 702 provided by the network device 300A. The network system data 702 includes an indication 704 of one or more characteristics 706 to 716 of the network device 300A. As discussed above, the fault may be caused by defects, or software bugs, in the network device 300. The network device system data 702 may be used to identify one or more causes of the fault, for example, where the system data 702 indicates that one or more characteristics of the network device 300A are not as expected.

These characteristics 706 to 716 of the network device 300A may include any one or more of the characteristics shown in Figure 7. The characteristics shown in Figure 7 include a manufacturer serial number 706. When setting up the network device 300A, a user may use the manufacturer serial number 706 to identify the network device 300A to the remote network management device 308, to enable it to identify and connect to the network device 300A. If an incorrect MSN 706 is provided or used, then the network device 300A may be incapable of establishing a connection with the external network 304.

Software characteristics 708, such as an indication of the latest version of one or more applications, or operating systems, of the network device 300A may be included. In some cases, the fault maybe caused by a software defect. Some software may cause the network device 300A to be unable to connect to the external network 304, for example, where an older version of software is causing incompatibility with other software, or network security protocols, needed to connect to the external network 304. Firmware characteristics 710 may be used to determine whether firmware in the network device 300A is defective or malfunctioning and causing the network device 300A to be incapable of connecting to the external network 304.

Memory characteristics 712 may represent a state of memory in the network device 300A may be indicative of a defect or cause of a fault. For example, the memory characteristics 712 may include an indication of whether one or more portions of volatile or non-volatile storage in the network device 300A is corrupted, or malfunctioning. The corruption or malfunction of storage in the network device 300A may cause erroneous operation of the network device 300A making it incapable of connecting to the external network 304.

Feature characteristics 714 may represent one or more features that the device 300A is capable of providing. In some examples, one or more features, such as network services or protocols, that the network device 300A is expected to provide may fail, causing the fault in the connection 310. The feature characteristics 714 may indicate which features of the device 300A are currently operational or non-operational.

Capability characteristics 716 may represent one or more capabilities that the device 300A is capable of performing. In some examples, this may include an indication of one or more hardware or software capabilities. In some cases, the lack or malfunction of certain capabilities may cause the fault in the connection 310.

Enabling 506 the further network device 300B to connect to the network device 300A may alternatively, or additionally, involve providing access for the further network device 300B to test the wired communication module 406. For example, the network device 300A may enable the further network device 300B to connect with one or more interfaces with the wired communication module 406 in the network device 300A. As such, the further network device 300B may be able to run one or more diagnostic tests on the wired communication module 406.

As discussed above, the network devices 300A to 300C shown in Figure 3 may be the same type of network devices 300 for example, the same make and/or model of network device 300. As such, each of these devices may similarly be configured to perform the fault detection procedure 500. Additionally, one or more of these device 300A to 300C may comprise computer-executable instructions 416 for performing a fault determination procedure. The fault determination procedure 800 will now be described with respect to Figure 8, and with reference to the architecture shown in Figure 3.

In this example, the network device 300A may comprise the instructions 416 for performing the fault determination procedure 800. A further network device 300C may lose connection with the external network 304 over its respective wired connection. For clarity, the further network device 300C referred to in this example is different to the further network device 300B referred to above with respect to Figures 5 to 7. However, it is to be appreciated that the further network device which loses its respective connection to the external network 304 may be any suitable further network device.

The fault determination procedure 800 comprises connecting 802 to the further network device 300C, for which a respective connection with the external network 304 has failed, using security credentials 418 stored in the storage 404. The credentials 418 used to connect to the further network device 300C during the fault determination procedure 800 may be the same credentials used during the fault detection procedure 500 described above, or may be different credentials. In some cases, network devices 300 may be provided with security credentials 418 to be used when connecting with other network devices 300, but which are different to security credentials used to connect to user devices 302.

The fault determination procedure 800 comprises testing the further network device 300C to identify a cause the respective fault in the connection of that further network device 300C with the external network over a respective wired communication module of that further network device 300C. In this way, it is possible to the network device 300A to determine the cause of a fault in an internet connection for a further network device 300C in the event that said further network device 300C is unable to access the internet. This enables users and engineers to readily identify the cause of faults in wired connections of network devices 300A to 300C without the costly resource and time expenditure involved in returning the network devices 300A to 300C to a manufacturer for repair.

In some examples, the fault determination procedure 800 may be triggered in response to the network device 300A receiving an instruction over the external network 304. It may not always be possible for the further network device 300C to detect a failure in the connection with the external network 304. In some cases, the further network device 300C may not include the capability to detect a fault, or specific types of faults. This may be due to a defect in the further network device 300C or where the further network device 300C is a different model of network device to the network device 300A. In this case, the fault may be detected at the remote network management device 308. The remote network management device 308 may monitor connections with respective network device 300A to 300C, for example, by regularly, or periodically, pinging the network devices 300A to 300C and/or monitoring network traffic generated by said network devices 300A to 300C.

The remote network management device 308 may then instruct one or more of the network devices 300A and 300B to which it is able to communicate over the external network 304, to perform the fault determination procedure 800. The network device 300A may connect to the further network device 300C using the security credentials 418 stored in the storage 404 by receiving a connection request from the further network device 300C and authenticating the further network device 300C using the security credentials and one or more attributes of the connection request. This may be performed when the further network device 300C is operating in a station mode and the network device 300A is operating in an AP mode.

Testing 804 the further network device 300C may be performed in response to receiving a testing request from the further network device 300C. For example, after connecting to the further network device 300C, the network device 300A may receive a request to test the further network device 300C.

In alternative examples, the network device 300 may, rather than receiving a testing request from the further network device 300C and after connecting to the further network device 300C, process one or more characteristics of the further network device 300C to identify a need to perform the testing 804. For example, the network device 300A operating in an AP mode may regularly connect and disconnect to user device 302 and/or other network capable computing device. However, network devices 300A to 300C may typically not be configured to connect with each other in the same manner as connections with user devices 302 are established. As such, the network device 300A may identify, from one or more characteristics of the further network device 300C that it is in need of testing. In this example, the one or more characteristics could include any one or more of: a device identifier, a name of the device, a serial number, a PSK used to connect to the network device 300A or any other relevant characteristic that may distinguish the further network device 300C from other device types, such as user devices 302. In this way, the characteristics of the further network device 300C may identify the respective fault in the connection of the further network device 300C with the external network 304. Testing the further network device 300C in this context may be performed once the fault is identified based on the characteristics of the further network device 300C.

Testing 804, the further network device 300C may involve comparing one or more characteristics of the further network device 300C with a set of one or more specified characteristics stored in the storage 404. The network device 300A may store a set of specified characteristics which represent desired and/or expected characteristics of other network devices 300B and 300C. The set of specified characteristics in the storage 404 may represent system requirements, software requirements, capabilities, features, or other relevant characteristics. These characteristics may represent minimum specifications or exact specifications which are needed for the further network device 300C to connect to the external network 304 over its wired communication module. If a difference between the one or more characteristics of the further network device 300C and the stored set of specified characteristics is determined based on the comparison, then the network device 300A may be generate an indication or warning of this difference. This difference or warning may be transmitted to a user device 302 or to the remote network management device 308.

Additionally, or alternatively, testing 804 may involve testing the respective wired communication module of the second further network device 300C. For example, the network device 300A may control one or more interfaces in the further network device 300C for connecting to the further network device's 300C wired communication module. The network device 300A may then include performing one or more tests on the wired communication module of the further network device 300C.

It is to be understood that any feature described in relation to any one example may be used alone, or in combination with other features described, and may also be used in combination with one or more features of any other of the examples, or any combination of any other of the examples. Furthermore, equivalents and modifications not described or shown in the accompanying figures above may also be employed without departing from the scope of the invention, which is defined in the accompanying claims. For example, the description of examples provided herein discusses the network devices 300A to 300C being included in the same institution, or premises. However, it is to be appreciated that in some examples, the network devices 300A to 300C may be located at different premises, or institutions, but in sufficient proximity to connect to each other using their wireless communication modules. In this way, network devices manufactured by the same company and/or connecting to the external network using different internet service providers, may still be able to support and/or test one another even if they are provided to different end users.

### Numbered Clauses

The following numbered clauses describe various embodiments of the present disclosure.
1. A network device configured to facilitate communication between one or more user devices and an external network, the network device comprising at least one processor, storage, and two or more communication modules,
   wherein the two or more communication modules include:
      a wired communication module adapted to receive an ethernet cable for connecting the network device to the external network; and
      a wireless communication module,
   wherein the storage comprises computer-executable instructions which, when executed by the at last one processor, cause the network device to perform a fault detection procedure, the fault detection procedure comprising:
      detecting a fault in a connection with the external network over the wired communication module;
      connecting to a further network device using the wireless communication module;
      enabling the further network device to test the network device to identify a cause of the fault in the connection with the external network over the wired communication module; and
      generating fault determination data representing the cause of the fault.
2. The network device of clause 1, wherein detecting a fault in the connection with the external network over the wired communication module comprises monitoring an operational status of the wired communication module, wherein the operational status of the wired communication module comprises one of a plurality of possible states, the plurality of possible states comprising at least:
   a disconnected state; and
   a connected state.
3. The network device of clause 2, wherein monitoring the operational status of the wired communication module comprises monitoring the operational status of the wired communication module for a predetermined period of time, and wherein a fault is detected when the operational status of the wired communication module comprises the disconnected state for the duration of the predetermined period of time.
4. The network device of clause 2 or clause 3, wherein the plurality of possible states comprise:
   the disconnected state;
   the connected state; and
   a marginal state.
5. The network device of clause 4, wherein detecting a fault comprises monitoring the operational status of the wired communication module for the predetermined period of time and wherein a fault is detected when at least one of the following conditions is satisfied:
   (a) the operational status of the wired communication module comprises the disconnected state for the duration of the predetermined period of time;
   (b) the operational status of the wired communication module comprises the marginal state for the duration of the predetermined period of time; or
   (c) the operational status of the wired communication module comprises the connected state for a portion of the predetermined period of time, wherein the portion of the predetermined time period is less than a threshold period of time.
6. The network device of any preceding clause, wherein the storage comprises computer-executable instructions that, when executed by the at least one processor, cause the network device to trigger execution of the fault detection procedure in response to a booting procedure in the network device.
7. The network device of any preceding clause, wherein connecting to the further network device comprises:
   configuring the network device to operate in a station mode for requesting to connect to further network devices;
   identifying the further network device using the wireless communication module;
   connecting to the further network device using security credentials; and
   sending a request for the further network device to test the network device to identify a cause of the fault in the connection with the external network over the wired communication module.
8. The network device of any one of clauses 1 to 6, wherein connecting to the further network device comprises:
   configuring the network device to operate in an access point mode for connecting to further network devices;
   receiving a request from the further network device to connect to the network device; and
   authenticating the request from the further network device.
9. The network device of any preceding clause, wherein enabling the further network device to test the network device to identify a cause of the fault in the connection with the external network over the wired communication module comprises at least one of:
   providing network device system data to the further network device, the network device system data including an indication of one or more characteristics of the network device; or
   providing access for the further network device to test the wired communication module.
10. The network device of any preceding clause, wherein the further network device is a first further network device, and wherein the storage comprises computer-executable instructions which, when executed by the at least one processor, causes the network device to perform a fault determination procedure comprising:
   connecting to a second further network device using security credentials stored in the storage, the second further network device being configured to connect to the external network using a respective wired communication module; and
   testing the second further network device to identify a cause of a respective fault in a connection of the second further network device with the external network over the respective wired communication module of the second further network device.
11. The network device of clause 10, wherein the fault determination procedure is triggered in response to the network device receiving an instruction over the external network.
12. The network device of clause 10 or clause 11, wherein connecting to the second further network device using the security credentials stored in the storage comprises:
   receiving a connection request from the second further network device; and
   authenticating the second further network device using the security credentials and one or more attributes of the connection request.
13. The network device of clause 12, wherein testing the second further network device is performed in a response to receiving a testing request from the second further network device.
14. The network device of clause 12, wherein the fault determination procedure comprises, after connecting to the second further network device:
   processing one or more characteristics of the second further network device to identify the respective fault in the connection of the second further network device with the external network; and
   performing the testing of the second further network device in response to the identified respective fault.
15. The network device of any one of clauses 10 to 14, wherein testing the second network device comprises at least one of:
   comparing one or more characteristics of the second further network device with a set of one or more specified characteristics stored in the storage; or
   testing the respective wired communication module of the second further network device.
16. A method of identifying faults in wired connections between network devices and an external network, the network devices being configured to facilitate communication between one or more user devices and the external network, wherein the method comprises:
   detecting a fault in a wired connection between a first network device and the external network;
   establishing a wireless connection between the first network device and a second network device;
   testing the first network device, using the second network device, to identify a cause of the fault in the wired connection; and
   generating fault determination data representing the cause of the fault.
17. The method of clause 16, wherein the first network device and the second network device comprise routers configured to enable the user devices to communicate with the external network.
18. The method of clause 16 or clause 17, wherein the method comprises the second network device sending the fault determination data to a user device associated with the first network device.
19. The method of any one of clauses 16 to 18, wherein the method comprises the second network device sending the fault determination data to a remote network management device over a respective wired connection between the second network device and the external network.
20. The method of any one of clauses 16 to 19, wherein detecting a fault in the wired connection between the first network node and the external network is performed:
   at the first network device; or
   at a remote network management device connected to the external network and configured to test the wired connection with the first network device.
21. The method of any one of clauses 16 to 20, wherein establishing the wireless connection between the first network device and the second network device comprises:
   configuring the first network device in a station mode for requesting to connect to the second network device;
   the first network device requesting to connect to the second network device, the request being generated using first security credentials stored in the first network device; and
   the second network device authenticating the first network device based on the request and second security credentials stored in the second network device.
22. The method of any one of clauses 16 to 20, wherein establishing the wireless connection between the first network device and the second network device comprises:
   configuring the second network device in a station mode for requesting to connect to the first network device;
   the second network device requesting to connect to the first network device, the request being generated using second security credentials stored in the second network device; and
   the first network device authenticating the second network device based on the request and first security credentials stored in the first network device.

## Claims

1. A network device configured to facilitate communication between one or more user devices and an external network, the network device comprising at least one processor, storage, and two or more communication modules,
wherein the two or more communication modules include:
a wired communication module adapted to receive an ethernet cable for connecting the network device to the external network; and
a wireless communication module,
wherein the storage comprises computer-executable instructions which, when executed by the at last one processor, cause the network device to perform a fault detection procedure, the fault detection procedure comprising:
detecting a fault in a connection with the external network over the wired communication module;
connecting to a further network device using the wireless communication module;
enabling the further network device to test the network device to identify a cause of the fault in the connection with the external network over the wired communication module; and
generating fault determination data representing the cause of the fault.

2. The network device of claim 1, wherein detecting a fault in the connection with the external network over the wired communication module comprises monitoring an operational status of the wired communication module, wherein the operational status of the wired communication module comprises one of a plurality of possible states, the plurality of possible states comprising at least:
a disconnected state; and
a connected state,
optionally, wherein monitoring the operational status of the wired communication module comprises monitoring the operational status of the wired communication module for a predetermined period of time, and wherein a fault is detected when the operational status of the wired communication module comprises the disconnected state for the duration of the predetermined period of time.

3. The network device of claim 2, wherein the plurality of possible states comprise:
the disconnected state;
the connected state; and
a marginal state,
wherein detecting a fault comprises monitoring the operational status of the wired communication module for the predetermined period of time and wherein a fault is detected when at least one of the following conditions is satisfied:
(a) the operational status of the wired communication module comprises the disconnected state for the duration of the predetermined period of time;
(b) the operational status of the wired communication module comprises the marginal state for the duration of the predetermined period of time; or
(c) the operational status of the wired communication module comprises the connected state for a portion of the predetermined period of time, wherein the portion of the predetermined time period is less than a threshold period of time.

4. The network device of any preceding claim, wherein the storage comprises computer-executable instructions that, when executed by the at least one processor, cause the network device to trigger execution of the fault detection procedure in response to a booting procedure in the network device.

5. The network device of any preceding claim, wherein connecting to the further network device comprises:
configuring the network device to operate in a station mode for requesting to connect to further network devices;
identifying the further network device using the wireless communication module;
connecting to the further network device using security credentials; and
sending a request for the further network device to test the network device to identify a cause of the fault in the connection with the external network over the wired communication module.

6. The network device of any one of claims 1 to 4, wherein connecting to the further network device comprises:
configuring the network device to operate in an access point mode for connecting to further network devices;
receiving a request from the further network device to connect to the network device; and
authenticating the request from the further network device.

7. The network device of any preceding claim, wherein enabling the further network device to test the network device to identify a cause of the fault in the connection with the external network over the wired communication module comprises at least one of:
providing network device system data to the further network device, the network device system data including an indication of one or more characteristics of the network device; or
providing access for the further network device to test the wired communication module.

8. The network device of any preceding claim, wherein the further network device is a first further network device, and wherein the storage comprises computer-executable instructions which, when executed by the at least one processor, causes the network device to perform a fault determination procedure comprising:
connecting to a second further network device using security credentials stored in the storage, the second further network device being configured to connect to the external network using a respective wired communication module; and
testing the second further network device to identify a cause of a respective fault in a connection of the second further network device with the external network over the respective wired communication module of the second further network device,
optionally, wherein the fault determination procedure is triggered in response to the network device receiving an instruction over the external network,
optionally, wherein connecting to the second further network device using the security credentials stored in the storage comprises:
receiving a connection request from the second further network device; and
authenticating the second further network device using the security credentials and one or more attributes of the connection request.

9. The network device of claim 8, wherein the fault determination procedure comprises, after connecting to the second further network device:
processing one or more characteristics of the second further network device to identify the respective fault in the connection of the second further network device with the external network; and
performing the testing of the second further network device in response to the identified respective fault.

10. The network device of any one of claim 8 or claim 9, wherein testing the second network device comprises at least one of:
comparing one or more characteristics of the second further network device with a set of one or more specified characteristics stored in the storage; or
testing the respective wired communication module of the second further network device.

11. A method of identifying faults in wired connections between network devices and an external network, the network devices being configured to facilitate communication between one or more user devices and the external network, wherein the method comprises:
detecting a fault in a wired connection between a first network device and the external network;
establishing a wireless connection between the first network device and a second network device;
testing the first network device, using the second network device, to identify a cause of the fault in the wired connection; and
generating fault determination data representing the cause of the fault.

12. The method of claim 11, wherein the first network device and the second network device comprise routers configured to enable the user devices to communicate with the external network and wherein the method comprises the second network device sending the fault determination data to a user device associated with the first network device,
optionally, wherein the method comprises the second network device sending the fault determination data to a remote network management device over a respective wired connection between the second network device and the external network.

13. The method of any one of claims 11 to 12, wherein detecting a fault in the wired connection between the first network node and the external network is performed:
at the first network device; or
at a remote network management device connected to the external network and configured to test the wired connection with the first network device.

14. The method of any one of claims 11 to 13, wherein establishing the wireless connection between the first network device and the second network device comprises:
configuring the first network device in a station mode for requesting to connect to the second network device;
the first network device requesting to connect to the second network device, the request being generated using first security credentials stored in the first network device; and
the second network device authenticating the first network device based on the request and second security credentials stored in the second network device.

15. The method of any one of claims 11 to 13, wherein establishing the wireless connection between the first network device and the second network device comprises:
configuring the second network device in a station mode for requesting to connect to the first network device;
the second network device requesting to connect to the first network device, the request being generated using second security credentials stored in the second network device; and
the first network device authenticating the second network device based on the request and first security credentials stored in the first network device.
